# EUROPEAN PATENT SPECIFICATION

(11) **EP 2 517 932 B1**
(45) Date of publication and mention of the grant of the patent: **20.09.2017**
(21) Application number: 10839155.8
(22) Date of filing: 02.12.2010
(51) Int. Cl.: B60R 21/217, B60R 21/205

(54) **AIR BAG DEVICE**
AIRBAG-VORRICHTUNG
DISPOSITIF DE SAC GONFLABLE

(30) Priority: 25.12.2009 JP 2009294961
(43) Date of publication of application: 31.10.2012
(73) Proprietor: Autoliv Development AB, 447 83 Vårgårda (SE)
(72) Inventor: OHSHINO, Masaki, Yokohama-shi, Kanagawa 222-8580 (JP); NARITA, Masaru, Yokohama-shi, Kanagawa 222-8580 (JP)
(74) Representative: Müller Verweyen
(86) International application number: PCT/JP2010/071571
(87) International publication number: WO 2011/077920

(56) References cited:
- EP-A1- 1 787 874
- EP-A1- 2 202 119
- GB-A- 2 353 256
- JP-A- 2001 122 072
- JP-A- 2001 122 072
- JP-A- 2009 262 697

## Description

### TECHNICAL FIELD

The present invention relates to an airbag device that is disposed in, for instance, an automobile.

### BACKGROUND ART

Various safety devices are installed in automobiles with a view to ensuring the safety of occupants. Airbag devices, in which an airbag is caused to deploy by a gas that is generated by an inflator, upon an emergency such as a collision or the like, are one such safety device.

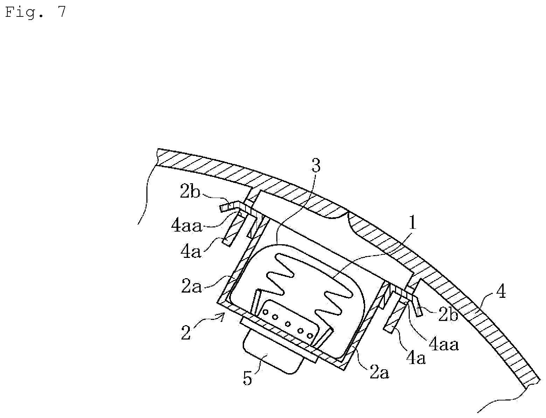

In an airbag device for a passenger seat known from JP 2008-110737, hooks 2b that are mounted in the vicinity of an opening of two opposing side walls 2a of an airbag case 2 are hooked onto engagement holes 4aa of standing walls 4a that are provided inward of an instrument panel 4, as illustrated in Fig. 7. In Fig. 7, the reference numeral 1 denotes an airbag, the reference numeral 3 denotes a band-like flap that covers the airbag 1, and the reference numeral 5 denotes an inflator.

In the airbag device, the entire perimeter of the airbag is covered by a metal- or resin-made box-like airbag case having an opening on the ceiling face, in order to maintain a folded-up shape of the airbag during installation in a vehicle, and in order to restrict the deployment direction during deployment.

An airbag case having such a configuration, however, is heavy, which runs counter to the trend towards lighter weights of recent years. A heavy airbag case demands more resources, and hence is likewise at odds with the trend towards resource conservation. Further, a mounting section of the airbag device must be stronger to cope with the greater weight of the airbag case.

Another passenger airbag device comprising the features of the preamble from claim 1 is known from GB 2353256 A.

### DISCLOSURE OF THE INVENTION

A problem to be solved by the invention is the increased demand for resources and greater weight of conventional metal- or resin-made box-like airbag cases, and which is at odds with resource conservation and weight reduction. A further problem is the requirement for substantial strength in the mounting section of an airbag device as the above-described weight increases.

The present invention was arrived at in order to solve the above problems. Specifically, the present invention solves the above problem by virtue of a configuration wherein an airbag case maintains a folded-up shape of an airbag during installation in a vehicle, and restricts the deployment direction during deployment. In addition, there is prescribed an optimal fastening mode of a fastening section of an engagement member and a lower face plate member of the airbag case, so that, as a result, the engagement member and the lower face plate member do not become unfastened during deployment of the airbag.

That is, the airbag device of the present invention is an airbag device that has
an inflator and an airbag; and
an airbag case in which the airbag is housed and in which there is mounted an inflator that supplies gas to the housed airbag;
the most significant characterizing feature of the airbag device being that the airbag case
is provided with an opening for airbag deployment, and, in the opening section, an engagement member provided with a hook for engagement to an instrument panel, and moreover a lower face plate member that is fastened to the engagement member; and
the engagement member and the lower face plate member arranged are configured as separate members and are arranged to overlap each other such that the engagement member is positioned inward of the lower face plate member at a fastening section of the engagement member and the lower face plate member; wherein integral fasting is elicited by way of extension sections that are extensions of opposing side faces of the engagement member and the lower face plate member, respectively, which are fastened against each other wherein an end face of of said lower face plate member to be fastened with said engagement member is positioned above said fastening section, wherein the engagement member comprises two opposing sides provided with hooks.

In the present invention, the airbag case maintains a folded-up shape of the airbag during installation in a vehicle, and restricts the deployment direction during deployment, simply by fastening through extension of the lower face plate member and the engagement member that is provided with hooks, in an opening. Therefore, side walls can be omitted wherever possible, and resources and weight can both be reduced.

A fastening section of the engagement member and the lower face plate member is disposed in an overlapping manner in such a way that the engagement member is positioned inward of the lower face plate member. During deployment of the airbag, therefore, no load acts on the fastening section in the detachment direction, and hence the fastening section is unlikely to come off.

In a case where, in the present invention, an end face of a fastening section of the lower face plate member with the engagement member is positioned above the fastening section, there is reduced the stress that acts on the fastening section on account of a load exerted on the fastening section during airbag deployment. The fastening section is rendered thereby less likely to come off.

Further weight reduction is achieved by making the thickness of the lower face plate member, which does not deform readily during airbag deployment, smaller than the thickness of the engagement member.

In the present invention, the airbag case maintains a folded-up shape of the airbag during installation in a vehicle, and restricts the deployment direction during deployment, simply by fastening through extension of the lower face plate member and the engagement member that is provided with hooks, in an opening. Therefore, the side walls of the airbag case can be omitted wherever possible. Accordingly, both resources and weight can be reduced.

A fastening section of the engagement member and the lower face plate member is disposed in an overlapping manner in such a way that the engagement member is positioned inward of the lower face plate member. During deployment of the airbag, therefore, no load acts on the fastening section in the direction of causing the latter to detach, and hence the fastening section is unlikely to come off.

### BRIEF DESCRIPTION OF THE DRAWINGS

Fig. 1 is a perspective-view diagram, obliquely from above, for explaining an example of an assembled state of an airbag device of the present invention provided in a passenger seat;
Fig. 2 is an exploded perspective-view diagram of the airbag device of the present invention illustrated in Fig. 1;
Fig. 3 is a set of diagrams for explaining the features of an airbag case in an airbag device of the present invention, wherein Fig. 3(a) is a perspective-view diagram, and Fig. 3(b) is a diagram viewed from arrow A in Fig. 3(a);
Fig. 4 is a set of enlarged diagrams of a fastening section, for explaining the features of an airbag case in an airbag device of the present invention, wherein Fig. 4(a) depicts an airbag before deployment, and Fig. 4(b) depicts the airbag after deployment;
Fig. 5 is a set of diagrams illustrating the state of an airbag after a deployment test using the airbag case of the airbag device of the present invention, wherein Fig. 5(a) is a plan-view diagram, and Fig. 5(b) is a side-view diagram;
Fig. 6 is a set of enlarged diagrams of a fastening section, for explaining the features in a comparative example of an airbag case in an airbag device of the present invention, wherein Fig. 6(a) depicts an airbag before deployment, and Fig. 6(b) depicts the airbag after deployment; and
Fig. 7 is a diagram for explaining a mounted state of a conventional airbag device that is mounted to an instrument panel.

### BEST MODE FOR CARRYING OUT THE INVENTION

Increased demand for resources and greater weight, which are at odds with resource conservation and weight reduction, are features of conventional metal- or resin-made box-like airbag cases. Further, the mounting section of the airbag device must be stronger to cope with the greater weight of the airbag device.

In the present invention, an airbag case that maintains a folded-up shape of the airbag during installation in a vehicle, and that restricts the deployment direction during deployment, is configured so that fastening is elicited by extending a lower face plate member and an engagement member that is provided with hooks, in an opening. Reductions in resources and weight are realized thereby.

In addition, there is prescribed an optimal fastening mode of the fastening section of the engagement member and the lower face plate member of the airbag case, so that, as a result, the fastening section of the engagement member and the lower face plate member becomes less likely to come off during deployment of the airbag.

### Working examples

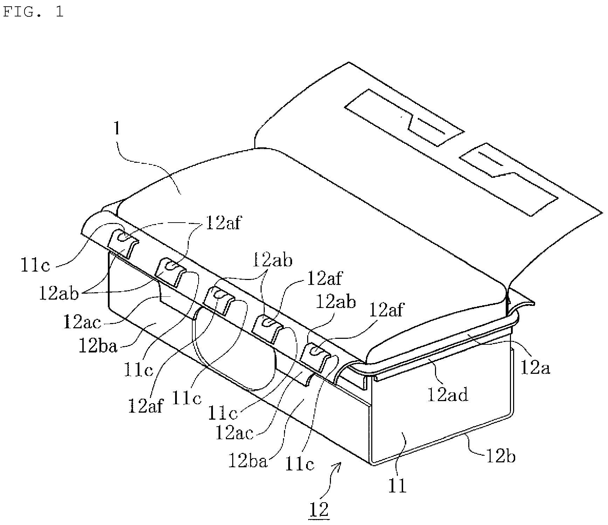

Configuration embodiments for carrying out the present invention will be explained next with reference to Fig. 1 to Fig. 4.

Fig. 1 to Fig. 4 are diagrams for explaining an airbag device of the present invention that is provided in a passenger seat.

The reference numeral 11 denotes a housing that holds an airbag 1 when the latter is housed in an airbag case 12. For instance, the housing 11 uses the same fabric as that of the airbag 1, and is stitched in the form of a bottomed box, having substantially the same shape as the airbag 1, and having an open ceiling, so as to enable housing of the airbag 1 in a folded-up state.

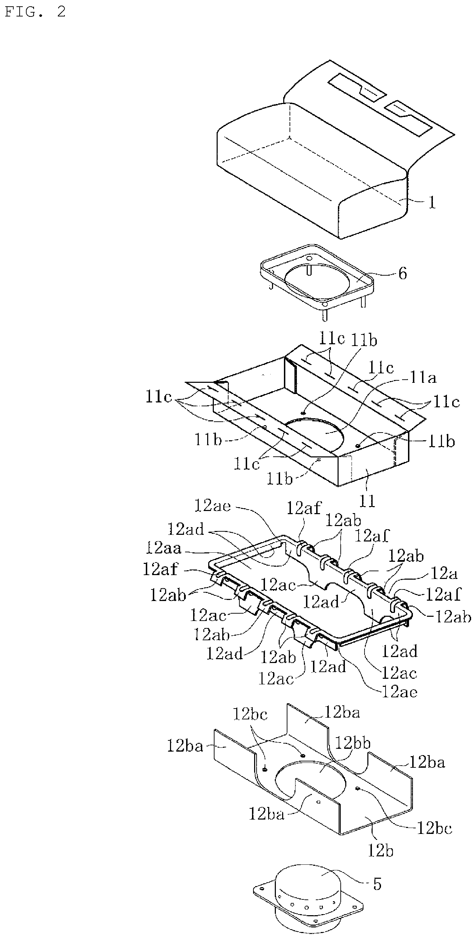

On the floor thereof, the fabric housing 11 is provided with mounting holes 11b and a connection hole 11a with an inflator 5. In the example of Fig. 2, cuts 11c into which there engage below-described hooks 12ab of the airbag case 12 are provided on two opposing sides of the opening.

The floor and all the side faces of the airbag are covered by the fabric housing 11 in a case where the airbag device is provided with such a fabric housing 11.

The airbag 1 can be protected thereby against scratches by the airbag case 12 upon tucking of the airbag 1 into the airbag case 12. The fabric housing 11 allows maintaining the folded-up state of the airbag 1 upon installation in the vehicle.

During deployment of the airbag 1, on the other hand, the fabric housing 11 holds the airbag 1 within the airbag case 12. An engagement member 12a and a lower face plate member 12b suppress elastic deformation of the fabric housing 11. Therefore, sufficient deployment performance of the airbag 1 in terms of restraining the occupant can be secured while confining the deployment direction of the airbag 1 to a correct direction.

The side walls of the airbag case 12 can be thus omitted, wherever possible, when using such a fabric housing 11.

That is, the airbag case 12 can be configured simply through fastening of the lower face plate member 12b against the engagement member 12a that is provided with the engagement hooks 12ab, for instance, on the occupant side of the opening 12aa, and on the side opposing the occupant side.

As a result, this allows reducing resources required for manufacturing the airbag case 12, and allows reducing the weight of the airbag case 12 itself.

In the example of Fig. 1 to Fig. 4, the engagement member 12a and the lower face plate member 12b are configured as separate members. Integral fastening is elicited by way of extension sections 12ac, 12ba that are extensions of opposing side faces of the engagement member 12a and the lower face plate member 12b, respectively. In a case where the engagement member 12a and the lower face plate member 12b are thus configured as separate members, mounting to a dissimilar vehicle can be accomplished simply through modification of either of the two members.

The extension sections 12ac, 12ba of the engagement member 12a and of the lower face plate member 12b that are configured as separate members can be fastened by welding, bolting or the like.

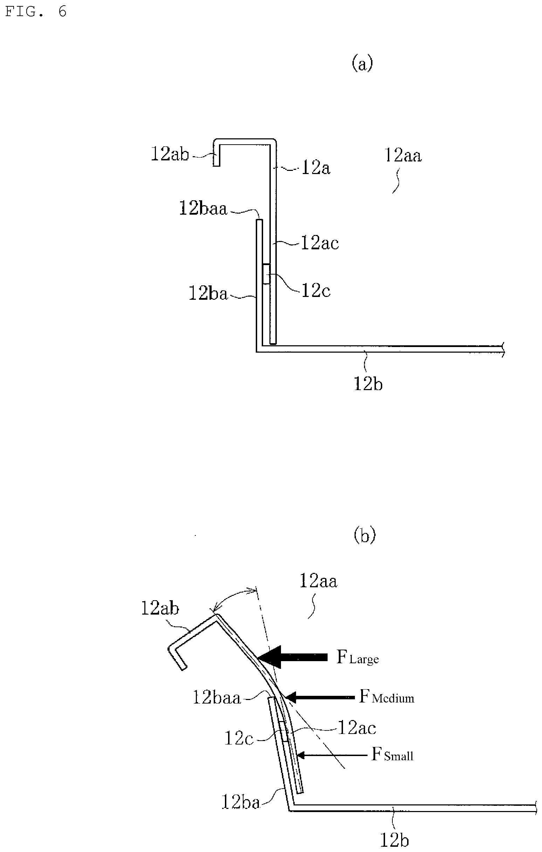

A load acts on the fastening section 12c upon deployment of the airbag 1. If the engagement member 12a of the fastening section 12c is disposed so as to be positioned outward of the lower face plate member 12b, a substantial load F acts thereupon, with the fastening section 12c as a fulcrum, in a detachment direction, so that the fastening section 12c becomes hence likelier to come off, as illustrated in Fig. 6. The greater the distance from the fastening section 12c, the greater the load F is that acts on the engagement member 12a.

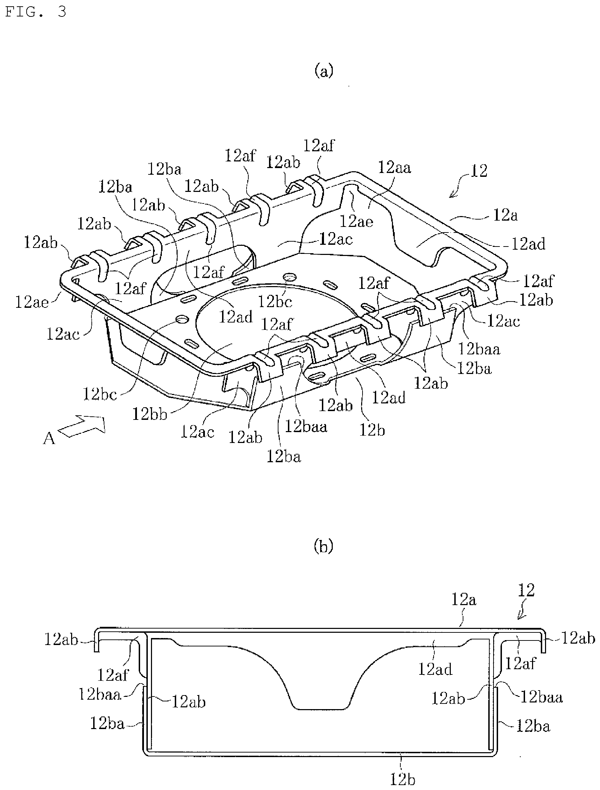

In the present invention, therefore, the engagement member 12a and the lower face plate member 12b are disposed overlapping each other in such a manner that the engagement member 12a is positioned inward of the lower face plate member 12 at the fastening section 12c, as illustrated in Fig. 3.

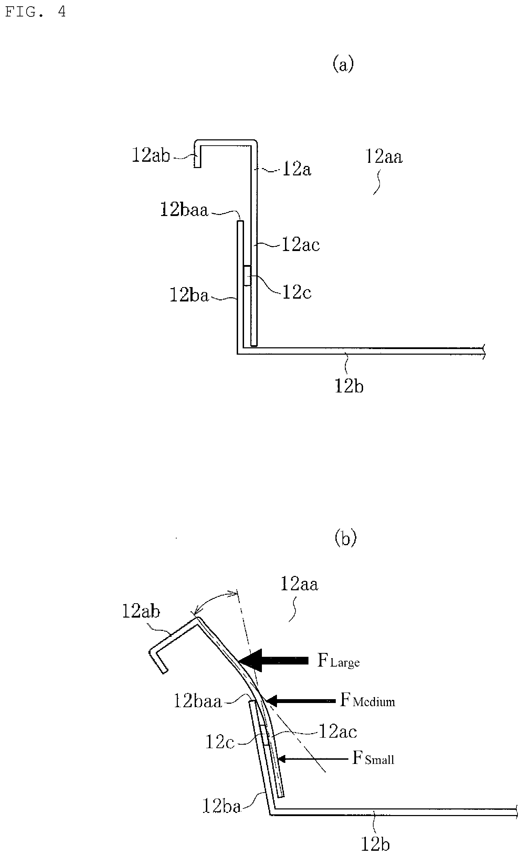

In such a configuration, no force acts in the direction of separating the engagement member 12a and the fastening section 12c of the lower face plate member 12b; instead, a force F acts in the direction of pushing the fastening section 12c, as illustrated in Fig. 4, so that the fastening section 12c becomes unlikelier to come off.

In this case, the fastening section 12c is rendered less likely to come off if the end face 12baa of the extension section 12ba of the lower face plate member 12b, from among the extension sections 12ac, 12ba that fasten the lower face plate member 12b and the engagement member 12a, is positioned above the fastening section 12c, as illustrated in Fig. 4.

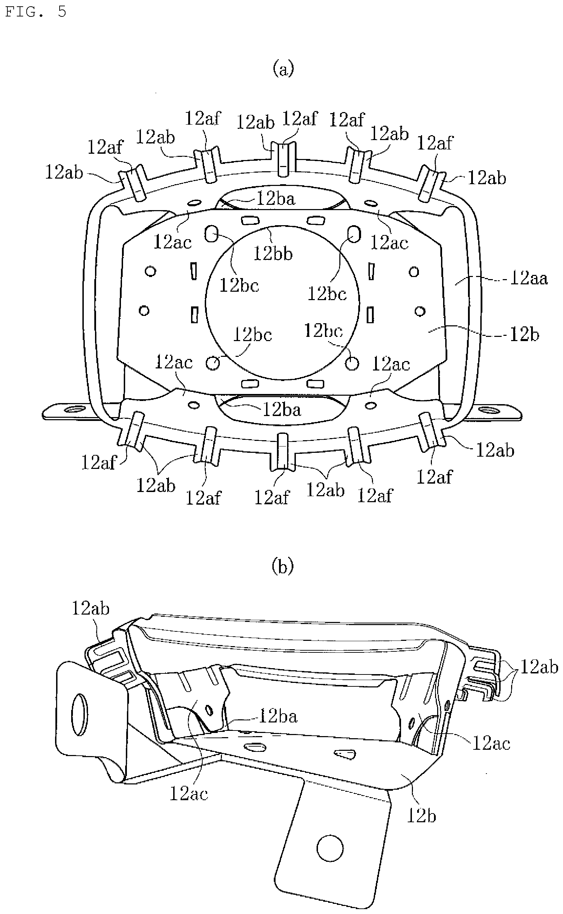

Fig. 5 is a diagram illustrating a state, at the fastening section 12c of the engagement member 12a and the lower face plate member 12b, after a deployment test in which there is used the airbag case 12 of the present invention with the engagement member 12a positioned inward of the lower face plate member 12b. Fig. 5 shows that in the present invention, the fastening section 12c has not come off after deployment of the airbag 1, even though the engagement member 12a is significantly widened towards the occupant side, as compared with the lower face plate member 12b.

In the present invention, thus, the lower face plate member 12b deforms less readily than the engagement member 12a. Therefore, further weight reduction can be achieved if the thickness of the lower face plate member 12b is set to be smaller than the thickness of the engagement member 12a.

In the examples of Fig. 1 to Fig. 4, the standing walls 12ad are press-formed over the entire perimeter of the opening 12aa of the engagement member 12a, to afford thereby greater rigidity of the engagement member 12a, and to enable the deployment direction of the airbag 1 during deployment to be restricted yet more reliably. Herein, work strain derived from press-forming or draw-forming of the standing walls 12ad is dispersed thanks to the presence of relief sections 12ae that are provided at the corners of the standing walls 12ad.

Also, beads 12af are formed at the hooks 12ab, over the entire longitudinal-direction length of the flat portions of the hooks 12ab that horizontal with respect to the opening 12aa, and at the standing walls 12ad from which the hooks 12ab project. Forming the beads 12af has the effect of increasing the rigidity of the hooks 12ab and of increasing the strength of the mounting section to the instrument panel.

The thickness of the engagement member 12a can be reduced and yet further weight reduction can be achieved, while maintaining the necessary strength, in a case where the beads 12af are formed thus at the portions of the hooks 12ab and of the standing walls 12ad.

The reference numeral 12BB in Fig. 1 to Fig. 4 denotes a fitting hole, of the inflator 5, provided in the lower face plate member 12b; the reference numeral 12bc denotes a mounting hole of the inflator 5; and the reference numeral 6 in Fig. 2 denotes retainer rings for fixing the airbag 1 and the inflator 5 to the airbag case 12.

In the airbag device of the present invention having the above-described configuration, the folded-up shape of the airbag 1 can be maintained, during installation in the vehicle, thanks to the fabric housing 11 that is formed as a bottomed box. The fabric housing 11 allows restricting the deployment direction of the airbag 1 upon deployment during an emergency.

The side walls of the airbag case 12 can thus be omitted wherever possible, and resources and weight can both be reduced, in a case where such a fabric housing 11 is used.

Moreover, the engagement member 12a is positioned inward of the lower face plate member 12b at the fastening section 12c of the engagement member 12a and the lower face plate member 12b. During deployment of the airbag 1, therefore, no load acts on the fastening section 12c in the direction of causing the latter to detach, and hence the fastening section 12c is unlikely to come off.

The present invention is not limited to the above examples, and may accommodate various design variations without departing from the technical idea set forth in the appended claims.

Specifically, the above-described airbag device is a preferred example of the present invention, but may be embodied and implemented in other ways, in accordance with various methods. Unless specifically indicated in the description of the present application, the invention is not restricted by the shape, size, configurational arrangement and so forth of the detailed parts depicted in the drawings. The expressions and terms used in the description of the present application are explanatory in purpose, and are not meant to be limiting in any way, unless restricting subject matter to that effect is specifically set forth.

For instance, the extension sections 12ac, 12ba of the engagement member 12a and the lower face plate member 12b of the airbag case 12 may be formed on all sides of the opening 12aa.

The inflator 5 is not limited to a disk-shaped type, and a solid-cylindrical type may be used herein. In a cylindrical type inflator is used, the lower face plate member 12b is shaped so as to have a cylindrical recessed section.

Also, the strength of the bottom face portion of the airbag 1 can be increased by integrally stitching the bottom section of the airbag 1 with the floor of the fabric housing 11. If comparable strength is sufficient, then the bottom face of the airbag 1 can be made up of one piece of fabric.

An instance where the fabric housing 11 is used has been explained above, but the fabric housing 11 may be omitted. In such a case, preferably, the airbag case 12 maintains the folded-up shape of the airbag 1 during installation in a vehicle, and restricts the deployment direction during deployment.

### INDUSTRIAL APPLICABILITY

The airbag device of the present invention is used installed in an automobile, but can be provided, to elicit similar effects, in transport equipment other than vehicles, for instance aircraft and vessels.

### EXPLANATION OF REFERENCE NUMERALS

- 1: airbag
- 5: inflator
- 11: fabric housing
- 12: airbag case
- 12a: engagement member
- 12aa: opening
- 12ab: hook
- 12ac: extension section
- 12b: lower face plate member
- 12ba: extension section
- 12baa: end face
- 12c: fastening section

## Claims

1. An airbag device, comprising:
an inflator (5) and an airbag (1); and
an airbag case (12) in which the airbag (1) is housed and in which there is mounted an inflator (5) that supplies gas to the housed airbag, wherein
said airbag case (12) is provided with an opening (12aa) for airbag deployment, and, in the opening section, an engagement member (12a) provided with a hook (12ab) for engagement to an instrument panel, and moreover a lower face plate member (12b) that is fastened to the engagement member (12a); wherein
the engagement member (12a) and the lower face plate member (12b) are configured as separate members and are arranged to overlap each other such that the engagement member (12a) is positioned inward of the lower face plate member (12b) at a fastening section (12c) of the engagement member (12a) and the lower face plate member (12b); **characterized in that**
integral fastening is elicited by way of extension sections (12ac, 12ba) that are extensions of opposing side faces of the engagement member (12a) and the lower face plate member (12b), respectively, which are fastened against each other; wherein
an end face (12baa) of said lower face plate member (12b) to be fastened with said engagement member (12a) is positioned above the fastening section (12c), wherein
the engagement member (12a) comprises two opposing sides provided with hooks (12ab).

2. The airbag device according to claim 1, wherein the thickness of said lower face plate member (12b) is smaller than the thickness of said engagement member (12a).

## Patentansprüche

1. Airbag-Vorrichtung, umfassend:
einen Gasgenerator (5) und einen Airbag (1); und
ein Airbaggehäuse (12), in dem der Airbag (1) aufgenommen ist und in dem ein Gasgenerator (5) befestigt ist, der dem aufgenommenen Airbag Gas zuführt, wobei
das Airbaggehäuse (12) mit einer Öffnung (12aa) für die Airbagentfaltung versehen ist und, in dem Öffnungsabschnitt, mit einem Einrastelement (12a), das mit einem Haken (12ab) zum Einrasten in eine Armaturentafel versehen ist, und darüber hinaus mit einem Unterseiten-Plattenelement (12b), das am Einrastelement (12a) befestigt ist; wobei
das Einrastelement (12a) und das Unterseiten-Plattenelement (12b) als getrennte Elemente ausgelegt sind und so angeordnet sind, dass sie einander derart überdecken, dass das Einrastelement (12a) an einem Befestigungsabschnitt (12c) des Einrastelements (12a) und des Unterseiten-Plattenelements (12b) zum Unterseiten-Plattenelement (12b) nach innen hin platziert ist;
**dadurch gekennzeichnet, *dass***
eine integrierte Befestigung durch Verlängerungsabschnitte (12ac, 12ba) bewirkt wird, die Verlängerungen gegenüberliegender Seitenflächen des Einrastelements (12a) beziehungsweise des Unterseiten-Plattenelements (12b) sind, die aneinander befestigt sind; wobei
eine Stirnfläche (12baa) des Unterseiten-Plattenelements (12b), die an dem Einrastelement (12a) befestigt werden soll, über dem Befestigungsabschnitt (12c) platziert ist, wobei
das Einrastelement (12a) zwei gegenüberliegende Seiten aufweist, die mit Haken (12ab) versehen sind.

2. Airbag-Vorrichtung nach Anspruch 1, wobei
die Dicke des Unterseiten-Plattenelements (12b) geringer ist als die Dicke des Einrastelements (12a).

## Revendications

1. Dispositif de sac gonflable, comprenant :
un gonfleur (5) et un sac gonflable (1) ; et
un boîtier de sac gonflable (12) dans lequel est logé le sac gonflable (1) et dans lequel est monté un gonfleur (5), qui fournit du gaz au sac gonflable logé, dans lequel
ledit boîtier de sac gonflable (12) est pourvu d'une ouverture (12aa) pour le déploiement du sac gonflable, et, dans la partie d'ouverture, d'un élément de prise (12a) pourvu d'un crochet (12ab) destiné à la venue en prise avec un tableau de bord, et en outre d'un élément de plaque de face inférieure (12b) qui est fixé à l'élément de prise (12a) ; dans lequel
l'élément de prise (12a) et l'élément de plaque de face inférieure (12b) sont configurés comme éléments séparés et sont agencés pour se chevaucher de telle manière que l'élément de prise (12a) est positionné sur une partie de fixation (12c) de l'élément de prise (12a) et de l'élément de plaque de face inférieure (12b) vers l'intérieur par rapport à l'élément de plaque de face inférieure (12b) ;
**caractérisé en ce que**
une fixation intégrale est obtenue au moyen de parties d'extension (12ac,12ba) qui sont des extensions de faces latérales opposées respectivement de l'élément de prise (12a) et de l'élément de plaque de face inférieure (12b), qui sont fixées l'une contre l'autre ; dans lequel
une face d'extrémité (12baa) dudit élément de plaque de face inférieure (12b) à fixer audit élément de prise (12a) est positionnée au-dessus de la partie de fixation (12c), dans lequel
l'élément de prise (12a) comprend deux côtés opposés pourvus de crochets (12ab).

2. Dispositif de sac gonflable selon la revendication 1, dans lequel
l'épaisseur dudit élément de plaque de face inférieure (12b) est inférieure à l'épaisseur dudit élément de prise (12a).
